# EUROPEAN PATENT SPECIFICATION

(11) **EP 2 294 095 B1**
(45) Date of publication and mention of the grant of the patent: **20.03.2013**
(21) Application number: 09770433.2
(22) Date of filing: 26.06.2009
(51) Int. Cl.: C08F 10/00, C08F 2/00, C08F 2/34

(54) **PROCESS FOR THE PRODUCTION OF AN ALPHA-OLEFIN POLYMER**
VERFAHREN ZUR HERSTELLUNG EINES ALPHA-OLEFIN-POLYMERS
PROCÉDÉ DE PRODUCTION D UN POLYMÈRE D ALPHA-OLÉFINE

(30) Priority: 26.06.2008 EP 08159067
(43) Date of publication of application: 16.03.2011
(73) Proprietor: BASF CORPORATION, Florham Park, NJ 07932 (US)
(72) Inventor: MUNTEANU, Dan, R-300087 Timisoara (RO); WIJSMAN, Geerlig Willem, NL-6191 PD Beek (NL); CEUSTERMANS, Roger, B-3360 Bierbeek (BE)
(74) Representative: Jansen, Cornelis Marinus
(86) International application number: PCT/NL2009/050376
(87) International publication number: WO 2009/157770

(56) References cited:
- EP-A- 0 560 035
- EP-A- 1 308 464
- US-A1- 2007 073 012

## Description

The present invention relates to a process for the production of polymers and copolymers of olefins of the formula CH2=CHR, wherein R is an alkyl or aryl radical having a number of carbon atoms from 1 to 10, comprising at least one (co)polymerization step in the gas phase, in the presence of a highly active catalyst obtained from a titanium compound supported on a magnesium halide in active form and an Al-alkyl compound.

Processes for the polymerization of one or more olefins are known which are carried out in the gas phase in fluidized or mechanically stirred bed reactors, in the presence of so-called Ziegler-Natta catalysts.

In these types of processes the heat of reaction is removed by means of a heat exchanger placed inside the reactor or in the recycle line of the reaction gas.

A commonly encountered problem in polymerization processes of this type, particularly in fluidized gas-phase reactors results from the presence of very fine polymer particles which are either produced from already existing fine catalyst particles or derive as a result of breakage of the catalyst itself as well as from attrition of polymer particles. These so-called fines tend to be drawn outside the polymer bed with the gas and recycle flow and to deposit on the walls of the reactor, or in expansion zones connected to the reactor, the reactor dome or domes, which is (are) present in the horizontal stirred gas phase reactors, the pipings, condensors and heat exchangers.

These fine particles deposit onto the inner walls of the reactor, expansions, domes and the heat exchanger, thereby cause an insulating effect and a lower heat transfer, resulting in the formation of hot spots in the reactor.

These effects are enhanced when the gas-phase alpha-olefin polymerization process is carried out in the presence of highly active catalysts such as those comprising the reaction product of an aluminum alkyl with a titanium compound supported on a magnesium halide in active form (Ziegler-Natta catalysts) and optionally an organosilane compound.

These problems occur mostly commonly with fluidized gas-phase reactors due to the high flow of gases, catalyst, and polymer powder which create static. Resolution of these problems in fluidized gas-phase reactors has therefore received more attention in the literature. However, this problem has not been recognized in mechanically stirred gas-reactors, either horizontally or vertically stirred, as a cause of fouling.

EP-359444 describes the introduction into the polymerization reactor of small amounts (generally smaller than 0.1 ppm with respect to the polymerization mixture) of a retarder selected from polymerization inhibitors or substances able to poison the catalyst, in order to reduce the olefin polymerization rate. However, as described in the same patent application, the use of larger quantities of the retarder adversely affects both the quality and properties of the polymer produced, such as the melt index, the melt flow ratio and/or the stereoregularity of the polymer, as well as reducing the efficiency of the process.

EP 560035 describes the use of compounds having at least two groups capable of reacting with an alkyl aluminium compound and being able to inhibit the polymerization on particles smaller than 850 micron. These compounds are used in amounts of more than 100 ppm. The compounds used are generally considered as catalyst poison, or at least inhibitor.

This process has a first disadvantage that it reduces the activity of the catalyst, but even more important, it influences the product properties of the final propylene polymer.

It is an object of the present invention to provide for a solution of the problem of fouling of a mechanically stirred bed reactor, more in particular a horizontal mechanically stirred bed reactor, and the recycle system, substantially without influencing important product properties of the polymer produced. More in particular the melt flow rate and the bulk density should not be influenced too much. The present invention is based on the discovery that relatively small amounts of certain compounds, when added to the gaseous polymerization mixture, will reduce the fouling, while at the same time keeping the other product properties unchanged, with the exception of agglomeration, which tends to be decreased.

The invention is accordingly directed to a process for the production of an alpha-olefin polymer, which process comprises feeding at least one alpha-olefin to a mechanically stirred bed gas phase reactor containing particles of the alpha-olefin polymer and polymerizing the alpha-olefin in the presence of a catalyst based on a titanium compound supported on a magnesium halide, an aluminum-alkyl compound and optionally an organosilane compound (often referred to as stereoregulator or external donor), in which process an amount of less than 100 ppm of at least one compound selected from the group of ethoxylated amines, fatty acid esters, diethanol amides, ethoxylated alcohols, alkylsulfonates and alkylphosphates is present during the polymerization.

Preferably the added compound is an ethoxylated amine, preferably an N-alkyl-diethanolamine. The compounds are added in amounts of less then 100 ppm on the basis of the amount of propylene (by weight). Preferred amounts are between 5 and 80 ppm. Especially the lower amounts have been found to have a very effective and good effect.

The compounds are either added to the recirculating gaseous or liquid phase, or directly into the reactor, preferably close to where the catalyst component(s) are entering the reactor. In principle the compounds can be added with the normal gaseous or liquid monomers streams entering the reactor. Also addition via either the co-catalyst injection stream or silane donor stream is possible. It is important that the compounds are present during the polymerization.

By the process of the invention fouling of the reactor walls and/or clogging of charge and discharge pipes of the reactor is avoided, while preserving at the same time process efficiency, catalyst yield and product quality.

The process of the present invention concerns the production of (co)polymers of olefins comprises at least one (co)polymerization step in the gas phase in which a mechanically stirred bed is maintained, in the presence of a catalyst comprising the product of the reaction of (1) a solid catalyst component comprising a titanium compound supported on a magnesium dihalide in active form optionally comprising an electron donor and (2) an alkyl aluminium compound optionally in the presence of an electron donor.

Generally the process of the invention is applicable to all type of propylene polymerization, using a Ziegler-Natta type catalyst in a mechanically stirred bed reactor, with recycle of the gas phase. This mechanically stirred bed can either be horizontal or vertical, as described in articles, presentations and books known to the persons in the art, or for example in the Propylene Handbook edited by EP Moore (Hanser Verlag, 1996).

In the process of the invention either propylene homo- or propylene copolymers including one or more types of comonomers can be produced. Preferably, in case a propylene copolymer is produced, the comonomer(s) is/are selected from the group of alpha-olefins, more preferred from the group of C2-C8 alpha-olefins and still more preferred from the group of C2-C4 alpha-olefins. It is particularly preferred that the comonomer is ethylene.

Further preferred, the described process for polymerising propylene is carried out in a one stage or multistage process which may comprise a series of polymerization reactors producing propylene homo- or copolymer. The reactor used is a mechanically stirred bed gas phase reactor, either horizontal or vertical, but more preferably horizontal, as is known in the art. This reactor is mechanically stirred, as opposed to fluidized bed reactors.

Polymerisation is carried out in the presence of a high yield Ziegler-Natta catalyst, and optionally hydrogen or another molar mass regulator.

In the process the conventional reaction conditions may be used, such as temperature, pressure, presence of inert diluents, catalyst-monomer ratio, polymerization time and the like.

The polymerization temperature is typically between 50 and 110° C., more preferably between 60 to 90° C, and still more preferably between 60 and 80° C. The pressure in the reactor is preferably between 20 to 100 bar, more preferably between 30 to 60 bar, and in gas phase reactors below 40 bar, more preferably between 10 and 40 bar.

By "Ziegler-Natta catalyst," we mean a transition metal compound that incorporates a Group 4-8 transition metal, preferably a Group 4-6 transition metal, and one or more ligands that satisfy the valence of the metal. The ligands are preferably halide, alkoxy, hydroxy, oxo, alkyl, and combinations thereof, supported on (or coprecipitated, or reacted with) a magnesium containing compound combined with an organo-aluminium compound. Ziegler-Natta catalysts exclude metallocenes or other single-site catalysts.

So the Ziegler-Natta pro-catalyst system features a Group 4-6 transition metal compound, a magnesium compound and an internal donor. Preferably, the transition metal compound is Ti, V, or Cr, most preferably Ti. Such preferred transition metal compounds include titanium halides, titanium alkoxides, vanadium halides, and mixtures thereof, especially, TiCl₃, TiCl₄, mixtures of VOCl₃ with TiCl₄, and mixtures of VCl₄ with TiCl₄. Suitable magnesium compounds include magnesium halides, such as magnesium chloride, magnesiumalkoxydes, dialkyl magnesium compounds such as diethylmagnesium, and organic magnesium halides (i.e., Grignard reagents) such as methylmagnesium chloride, ethylmagnesium chloride, and butylmagnesium bromide. The internal donor(s) are often organic esters such as ethylbenzoate, di-esters, such as di-alkyphthalates, ethers, di-ethers, such as 1,3-dimethoxypropane derivatives, ketons, amides, and combinations thereof.

The cocatalyst component is an aluminium alkyl compound, preferably of the general formula AlR₃₋ₙXₙ wherein R stands for straight chain or branched alkyl group having 1 to 20, preferably 1 to 10 and more preferably 1 to 6 carbon atoms, X stands for halogen and n stands for 0, 1, 2 or 3.

In addition to the above compounds also at least one electron donor is present, generally a silane, such as cyclohexylmethyldimethoxysilane (CHMDMS), dicyclopentyldimethoxysilane (DCPDMS), di-iso-propyldimethoxysilane (DIPDMS), iso-butyl-iso-propyldimethoxysilane (IBIPDMS) or di-iso-butyldimethoxysilane (DIBDMS)

The amount of catalyst components, defined as the molar ratio of aluminium alkyl to C₃, electron donor to C₃ and aluminium alkyl to Ti and electron donor to Ti.

The invention is now elucidated on the basis of the following examples.

### Examples

Propylene was polymerized in a mechanically stirred bed reactor with continuous feeding of fresh propylene using a catalyst based on a Ziegler Natta catalyst system, comprising the ZN procatalyst (magnesium chloride/titaniumchloride/internal donor), triethyl aluminium (TEA), and a dialkyl-dimethyl silane. The TEA/Ti molar ratio was 104 and the silane/Ti molar ratio was 11. The gas phase comprised propylene with some small amounts of nitrogen, alkane diluent and propane at a total pressure of 21 bar. An amount of N-alkyl-diethanolamine (Atmer 163) was added to the reactor together with the aluminum alkyl and silane donor.

The polymerization was started at 50°C by introducing the ZN procatalyst in the reactor which was equilibrated at 21 bar with the TEA and silane donor already present and during a start up period of 5 minutes the polymerization temperature of 76°C was reached.

The polymerization was terminated after 60 min.

An indicative sign for polymer build on the reactor wall and cover is the temperature of the thermocouple in the gas phase (not in the polymer bed). When polymer particles are covering the surface of the reactor walls and cover, the heat transfer is decreased to the cooler cover body. The decrease of the transfer causes increase of the gas phase temperature measured by this thermocouple. According to the time profile of the temperature change and its extend, the beginning of the polymer deposition and its size/extend can be determined.

In the table the results are given in dependence of the amount of the N-alkyl-diethanolamine added tot the gas phase.

| Example | ppm amine | MFR 21N | Bulk density g/L | Net act. Kg/(g*h) | Agglomeration >2.5 mm % | Final temperature |
|---|---|---|---|---|---|---|
| | | | | | | |
| 1 | 0 | 4.7 | 469 | 27.3 | 0.1 | 79.5 |
| 2 | 25 | 4.6 | 470 | 25.4 | 0.0 | 78.0 |
| 3 | 50 | 4.3 | 470 | 24.0 | 0.1 | 75.5 |
| 4 | 100 | 3.6 | 467 | 22.5 | 0.1 | 75.5 |

### Comparative examples

### H₂O experiments (2 and 5 ppm) and 02 experiments (1.9 ppm)

Instead of adding N-alkyl-diethanolamine to the reactor a predetermined amount of oxygen or water (feed as mixtures in propylene) was added to the reactor before the reaction was started by adding the ZN procatalyst.

| Comparative Example | ppm 02 or H2O | MFR 21N | Bulk density g/L | Net act. Kg/(g*h) | Agglomeration >2.5 mm % | Final temperature |
|---|---|---|---|---|---|---|
| | | | | | | |
| 1 | 0 | 4.7 | 469 | 27.3 | 0.1 | 79.5 |
| 2a* | 1.9 | 4.3 | 468 | 23.7 | 0.5 | 78.3 |
| 3a* | 2 | 4.0 | 471 | 26.4 | 0.4 | 78.0 |
| 4a* | 5 | 3.9 | 456 | 23.2 | 0.0 | 78.0 |

| | | | | | | |
|---|---|---|---|---|---|---|
| *: In example 2a Oxygen was added and in the examples 3a and 4a water | | | | | | |

## Claims

1. Process for the production of an alpha-olefin polymer, which process comprises feeding of at least one alpha-olefin to a mechanically stirred bed gas phase reactor containing particles of the alpha-olefin polymer and polymerizing the alpha-olefin in the presence of a catalyst based on a titanium compound and a magnesium compound, an aluminum-alkyl compound and optionally an organosilane donor, in which process an amount of less than 100 ppm of at least one compound selected from the group of ethoxylated amines, fatty acid esters, diethanol amides, ethoxylated alcohols, alkylsulfonates and alkylphosphates is present during the polymerization.

2. Process according to claim 1, wherein the amount of the said at least one compound is between 5 and 80 ppm.

3. Process according to claim 1 or 2, wherein the said at least one compound is an ethoxylated amine, preferably an N-alkyl-diethanolamine.

4. Process according to claims 1-3, wherein an alpha-olefin having from 3 to 5 carbon atoms is present in the gas phase in a molar concentration of from 20 to 90% with respect to the total gas.

5. Process according to claims 1-4, wherein the alpha-olefin is propylene.

6. Process according to claims 1-5, **characterized in that** the titanium compound comprises at least one halide-Ti bond.

7. Process according to claims 1-6, wherein the Al alkyl compound is selected from triethylaluminium or other trialkylaluminium.

8. Process according to claims 1-7, wherein the gas phase is at least partly recirculated over the reactor.

9. Process according to any one of the claims 1-8, wherein the stirred bed gas phase reactor is horizontal.

10. Process according to any one of the claims 1-8, wherein the stirred bed gas phase reactor is vertical.

## Patentansprüche

1. Verfahren zur Herstellung eines Alpha-Olefin-Polymers, umfassend das Zuführen von mindestens einem Alpha-Olefin zu einem mechanisch gerührten Bettgasphasenreaktor, der Teile des Alpha-Olefin-Polymers enthält, und Polymerisieren des Alpha-Olefins in Anwesenheit eines Katalysators, basierend auf einer Magnesiumverbindung, einer Aluminium-AlkylVerbindung und optional einem Organosilandonor, in welchem Verfahren eine Menge von weniger als 100 ppm von mindestens einer Verbindung, ausgewählt aus der Gruppe von ethoxylierten Aminen, Fettsäureestern, Diethanolamiden, ethoxylierten Alkoholen, Alkylsulfonaten und Alkylphosphaten, während der Polymerisation anwesend ist.

2. Verfahren nach Anspruch 1, wobei die Menge der mindestens einen Verbindung zwischen 5 und 80 ppm beträgt.

3. Verfahren nach Anspruch 1 oder 2, wobei die mindestens eine Verbindung ein ethoxyliertes Amin, vorzugsweise ein N-Alkyl-Diethanolamin ist.

4. Verfahren nach den Ansprüchen 1-3, wobei ein Alpha-Olefin mit 3 bis 5 Kohlenstoffatomen in der Gasphase in einer molaren Konzentration von 20 bis 90 % in Bezug auf das Gesamtgas vorhanden ist.

5. Verfahren nach den Ansprüchen 1-4, wobei das Alpha-Olefin Propylen ist.

6. Verfahren nach den Ansprüchen 1-5, **dadurch gekennzeichnet, dass** die Titanverbindung mindestens eine Halid-Ti-Bindung umfasst.

7. Verfahren nach den Ansprüchen 1-6, wobei die Al-Alkylverbindung ausgewählt ist aus Triethylaluminium oder einem anderen Trialkylaluminium.

8. Verfahren nach den Ansprüchen 1-7, wobei die Gasphase mindestens teilweise über den Reaktor rezirkuliert wird.

9. Verfahren nach einem der Ansprüche 1-8, wobei der gerührte Bettgasphasenreaktor horizontal ist.

10. Verfahren nach einem der Ansprüche 1-8, wobei der gerührte Bettgasphasenreaktor vertikal ist.

## Revendications

1. Procédé de production d'un polymère d'alpha-oléfine, ledit procédé comprenant l'alimentation d'au moins une alpha-oléfine dans un réacteur en phase gazeuse à lit agité mécaniquement contenant des particules du polymère d'alpha-oléfine et la polymérisation de l'alpha-oléfine en présence d'un catalyseur à base d'un composé de titane et d'un composé de magnésium, d'un composé d'alkyl-aluminium et éventuellement d'un organosilane donneur, dans lequel procédé une quantité inférieure à 100 ppm d'au moins un composé choisi dans le groupe consistant en amines éthoxylées, esters d'acides gras, amides de diéthanol, alcools éthoxylés, sulfonates d'alkyle et phosphates d'alkyle, est présente durant la polymérisation.

2. Procédé selon la revendication 1, dans lequel la quantité dudit au moins un composé se situe entre 5 et 80 ppm.

3. Procédé selon la revendication 1 ou 2, dans lequel ledit au moins un composé est une amine éthoxylée, de préférence une N-alkyl-diéthanolamine.

4. Procédé selon les revendications 1 à 3, dans lequel une alpha-oléfine comportant de 3 à 5 atomes de carbone est présente dans la phase gazeuse dans une concentration molaire de 20 à 90 % par rapport au gaz total.

5. Procédé selon les revendications 1 à 4, dans lequel l'alpha-oléfine est le propylène.

6. Procédé selon les revendications 1 à 5, **caractérisé en ce que** le composé de titane comprend au moins une liaison halogénure-Ti.

7. Procédé selon les revendications 1 à 6, dans lequel le composé d'alkyl-Aluminium est choisi parmi le triéthylaluminium ou d'autres trialkylaluminium.

8. Procédé selon les revendications 1 à 7, dans lequel la phase gazeuse est au moins en partie recirculée sur le réacteur.

9. Procédé selon l'une quelconque des revendications 1 à 8, dans lequel le réacteur en phase gazeuse à lit agité est horizontal.

10. Procédé selon l'une quelconque des revendications 1 à 8, dans lequel le réacteur en phase gazeuse à lit agité est vertical.
